# FASCICULE DE BREVET EUROPEEN

(11) **EP 0 433 143 B1**
(45) Date de publication et mention de la délivrance du brevet: **17.02.1993**
(21) Numéro de dépôt: 90403487.3
(22) Date de dépôt: 07.12.1990
(51) Int. Cl.: B05B 1/16, B05B 1/30, A01M 7/00

(54) **Dispositif support de buses, à changement rapide**
Schnell auswechselbarer Düsenträger
Quickly changeable nozzle carrier

(30) Priorité: 11.12.1989 FR 8916326
(43) Date de publication de la demande: 19.06.1991
(73) Titulaire: TECNOMA, 51206 Epernay (FR)
(72) Inventeur: Ballu, Patrick, Jean-Marie, F-51100 Reims (FR)
(74) Mandataire: Colas, Jean-Pierre

(56) Documents cités:
- FR-A- 2 290 254
- Motorisation et Technique Agricole no. 50, février 1983, Bois-le-Roi,France pages 180 - 193; "LES BUSES...ELEMENTS ESSENTIELS"

## Description

La présente invention est relative à un dispositif support de buses, destiné à être employé dans une installation de pulvérisation de liquides, pour laquelle il est nécessaire de pouvoir disposer de buses de plusieurs formes ou dimensions, qui puissent être permutées de façon presqu'instantanée.

De tels supports de buses comportent habituellement un corps présentant un passage d'entrée et au moins un passage de sortie qui peuvent communiquer l'un avec l'autre, et sur lequel est montée à rotation une pièce rotative qui peut porter simultanément au moins deux buses, des moyens pour immobiliser la pièce rotative à volonté dans des positions déterminées par rapport au corps, ces positions étant telles que, dans au moins certaines d'entre elles, une des buses est reliée à un passage de sortie du corps.

On conçoit qu'un simple mouvement de rotation de la pièce rotative par rapport au corps permet de permuter une buse avec une autre.

On connaît, par ailleurs, des dispositifs anti-goutte, associés à des dispositifs à buses non permutables, et dont l'utilité est la suivante. Dans une installation importante, notamment une installation pourvue d'un nombre important de buses distinctes, la commande de l'alimentation des buses est centralisée, et se fait au moyen de vannes, à commande électrique par exemple, situées sur une conduite d'alimentation, à une certaine distance de la buse. Lors de la fermeture de la vanne, le volume de liquide qui reste entre la vanne et la buse s'écoule par celle-ci de façon non désirée. Le dispositif anti-goutte fonctionne comme un clapet situé le plus près possible de la buse, et qui ferme la liaison entre le conduit d'alimentation et la buse dès que la pression du liquide baisse dans ce conduit, si bien que seul le petit volume de liquide qui reste entre le dispositif anti-goutte et la buse s'écoulera par celle-ci.

On a proposé, voir FR-A-2.290.254, de combiner un support de buses multiples avec un dispositif anti-goutte. L'appareillage décrit comporte un corps dont un canal intérieur débouche d'un côté dans la chambre d'un dispositif anti-goutte, et, de l'autre côté, après un tournant à angle droit, dans une surface cylindrique qui constitue un palier pour le support de buses multiples. Dans sa partie centrale, le corps porte des moyens pour le fixer sur un conduit d'amenée, et un second canal intérieur, parallèle au premier, sert à relier le conduit d'amenée à la chambre du dispositif anti-goutte.

Cette structure présente l'inconvénient d'une distance relativement grande, à peu près égale à la longueur du corps, entre le dispositif anti-goutte et les buses, si bien qu'un volume relativement élevé de produit s'écoule à chaque interruption de marche.

La demanderesse a commercialisé, sous la marque "TRIMATIC", un autre appareillage, dans lequel le palier qui porte le support de buses est porté par le couvercle qui forme la chambre du dispositif anti-goutte. Ce couvercle est évidemment traversé par un conduit de sortie. Cette disposition a permis de raccourcir de façon appréciable la distance entre le dispositif anti-goutte et les buses, mais elle entraîne des formes compliquées pour le dispositif anti-goutte et sa chambre, car le conduit d'amenée se trouve à l'opposé du couvercle, donc du conduit de sortie.

Le but de la présente invention est de fournir un appareil du même genre que ceux qu'on vient de décrire, et dans lequel la distance entre le dispositif anti-goutte et les buses soit aussi réduite que possible, avec des formes simples et une construction robuste et bon marché.

Pour obtenir ce résultat, l'invention fournit un dispositif support de buses, comportant, groupés en un ensemble démontable:
- un corps qui présente un passage d'entrée qui, d'un côté, peut être raccordé à un conduit d'alimentation et, de l'autre côté, débouche dans une chambre,
- un dispositif anti-goutte placé dans la chambre et comportant une pièce mobile ou déformable apte à interrompre la circulation entre ladite chambre et un passage de sortie, et des moyens de déplacement de ladite pièce mobile ou déformable,
- une pièce porte-buses, montée à rotation sur une surface de palier présentée par le corps, portant au moins deux buses, et présentant des orifices disposés pour mettre en communication une buse déterminée avec le passage de sortie pour une position convenable de ladite pièce porte-buses,

ce dispositif ayant pour particularité que la surface de palier entoure la partie du corps qui contient la chambre où est placé le dispositif anti-goutte.

De préférence, le dispositif comporte un couvercle qui, avec le corps, délimite la chambre, et maintient le dispositif anti-goutte contre un déplacement axial qui l'écarterait du corps, et la surface de palier est disposée de telle sorte que la pièce porte-buses est retenue par le couvercle, si le corps est d'une seule pièce, ou par la partie du corps qui porte le couvercle, si le corps est en deux parties.

Avantageusement dans ce cas, la chambre qui contient le dispositif anti-goutte a une symétrie de révolution, et la pièce porte-buses se trouve essentiellement entre deux plans perpendiculaires à l'axe de la chambre, et dont l'un coupe le conduit d'alimentation ou la chambre, et l'autre coupe la chambre ou le couvercle.

De préférence aussi, cette modalité pouvant se combiner avec les modalités préférées ci-dessus, une paroi du corps dont la face interne limite la chambre constitue, au moins en partie, par sa face externe, la surface de palier sur laquelle est montée la pièce porte-buses.

On comprend que, selon l'invention, le palier portant la pièce porte-buses entoure la chambre du dispositif anti-goutte, ce qui réduit réellement autant qu'il est possible la distance entre ce dernier et les buses, tout en permettant d'aboutir à des formes extrêmement simples, ainsi qu'on le verra par les exemples qui vont suivre. Cela est un gage de robustesse et de bon marché.

Actuellement, dans les appareils agricoles de pulvérisation, les supports de buse sont fixés sur une conduite d'alimentation, en général horizontale, au moyen de raccords vissés de type classique. Le montage et le démontage sont des opérations fastidieuses, si bien qu'en fin de campagne, l'utilisateur a tendance à les laisser montés. Cette pratique a pour inconvénient des incidents tels que corrosion, colmatages, fuites, éclatement dû au gel, etc.. après une période d'arrêt prolongée.

Avantageusement, il est prévu des moyens de raccordement rapides pour monter le dispositif sur un conduit d'alimentation présentant un orifice latéral et en même temps raccorder le passage d'entrée à l'intérieur dudit conduit d'alimentation. De préférence, le passage d'entrée est parallèle à l'axe de rotation de la pièce porte-buses, et est prévu pour se raccorder perpendiculairement au conduit d'alimentation.

L'invention va maintenant être exposée de façon plus détaillée à l'aide d'exemples pratiques illustrés avec les dessins, parmi lesquels:
Figure 1 est une vue en coupe d'un dispositif support de buses selon l'invention, et
Figure 2 est une coupe analogue à celle de la figure 1, montrant une variante de ce dispositif.
Figure 3 est une coupe, analogue à celle des figures 1 et 2, d'une autre variante du dispositif.
Figure 4 est une coupe, suivant la ligne IV-IV de la figure 3, du corps du porte-buses.

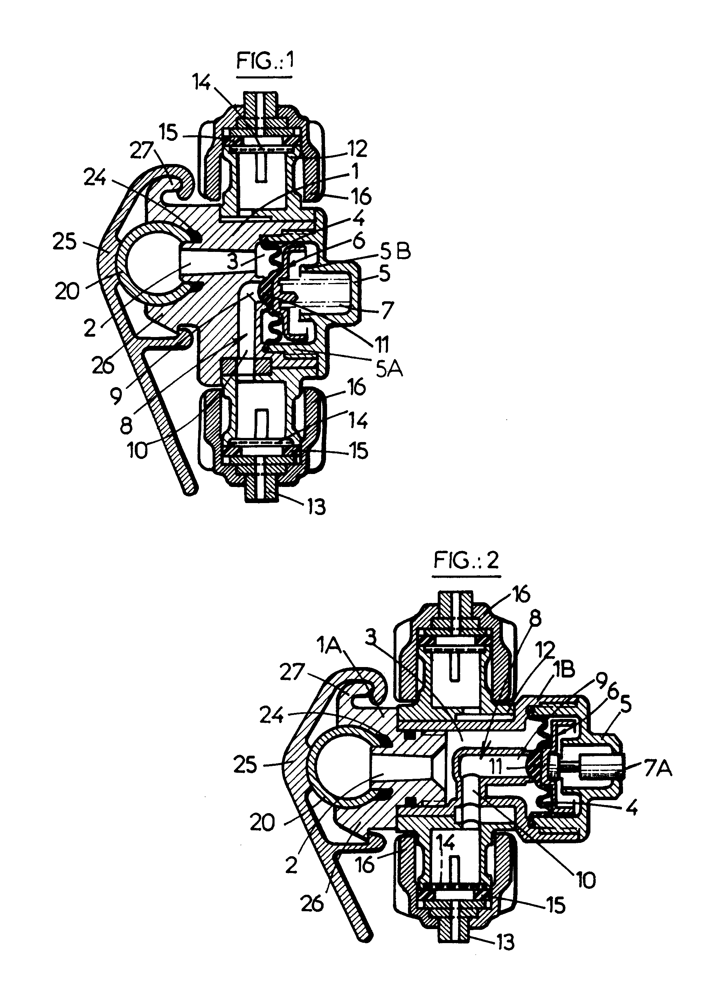

Le porte-buses de la figure 1 comprend un corps 1 qui présente un passage d'entrée 2, et qui débouche d'un côté à l'extérieur, et de l'autre côté dans la chambre 3 du dispositif anti-goutte. Cette chambre 3, de forme générale cylindrique, avec un axe parallèle à celui du passage d'entrée 2, est limitée, du côté opposé à ce passage d'entrée, par une membrane déformable 4 maintenue par un couvercle 5, vissé sur le corps 1. Le couvercle 5 comprend une bague 5A et la membrane 4 est serrée entre le bord de cette bague et un épaulement du corps sur toute la périphérie de cette membrane. Une pièce de poussée 6 appuie sur la partie centrale de la membrane 4. Cette pièce de poussée est chargée par un ressort hélicoïdal 7, qui prend appui d'un côté sur la pièce de poussée 6, et de l'autre sur la partie centrale du couvercle 5, de façon à écarter la membrane 4 de ce couvercle. Une partie annulaire 5B du couvercle sert de logement au ressort 7, et constitue en même temps une butée qui limite le déplacement de la pièce de poussée 6, et par conséquent de la membrane 4, dans le sens de l'ouverture du dispositif anti-goutte. Le passage de sortie 8 comprend une première partie 9 dirigée selon l'axe de la chambre 3, et une seconde partie 10 perpendiculaire à l'axe de cette chambre. Dans la position de fermeture, représentée à la figure 1, la partie centrale épaissie 11 de la membrane 4 vient en appui contre l'extrémité de la partie 9 du passage de sortie, et interrompt la communication de ce passage avec la chambre 3.

Le corps 1 présente une surface cylindrique qui sert de palier pour la pièce porte-buses 12, laquelle peut tourner autour de l'axe de cette surface cylindrique. Cet axe est confondu avec l'axe de la chambre 3 du dispositif anti-goutte. La pièce porte-buses 12 est maintenue en place par un prolongement du couvercle 5 et par un épaulement du corps 1, cet épaulement marquant la limite de la surface cylindrique formant palier. La seconde partie 10 du passage de sortie débouche dans cette surface cylindrique. La pièce porte-buses 12 comprend un certain nombre de passages, sur lesquels peuvent être montées des buses 13, avec interposition d'un filtre 14 et d'un joint 15, grâce à des capuchons filetés 16, pourvus d'un filetage femelle qui coopère avec un filetage mâle de la pièce porte-buses.

On notera que le démontage du porte-buse est d'une grande simplicité. En effet, l'enlèvement du couvercle 5 libère à la fois la membrane 4, la pièce de poussée 6, le ressort 7 et la pièce porte-buses 12, si bien que le corps reste seul.

Le raccordement du dispositif avec un conduit d'alimentation est obtenu de la façon suivante: un tuyau d'alimentation 20 est percé d'un trou, d'axe perpendiculaire à celui de ce tuyau. Les bords de ce trou pénètrent dans une gorge 24 du corps, qui entoure l'orifice d'entrée du passage d'entrée, et qui est pourvue d'un joint torique. Une pièce élastique de fixation 25 prend appui sur deux saillies 26, 27 en forme de crochet prévus de part et d'autre du passage d'entrée 2, et serre le tuyau 20 contre le joint torique prévu dans la rainure 24.

Le porte-buses de la figure 2 diffère essentiellement de celui de la figure 1 par la structure du corps. Celui-ci est formé de deux parties, 1A, 1B reliées de façon étanche. La partie 1A du corps comprend le passage d'entrée 2, avec la gorge 24 et les saillies en forme de crochet 26, 27 pour la fixation sur le tuyau d'alimentation, cette fixation se faisant de la même manière que dans la figure 1. La partie de corps 1B est vissée sur la partie 1A, elle porte le couvercle 5, de forme analogue à celle de celui de la figure 1, à part le fait qu'il ne présente pas de prolongement pour maintenir la pièce porte-buses 12, celle-ci étant maintenue par un épaulement de la partie 1B elle-même. Le passage de sortie 8 est porté par la partie de corps 1B, elle est également en deux parties à angle droit 9 et 10. Une différence avec la figure 1 consiste dans le fait que la partie axiale 9 du passage de sortie 8 est coaxiale au passage d'entrée 2. Il résulte de cette disposition que la pièce porte-buses 12 tourne coaxialement à la fixation de l'ensemble sur le conduit d'alimentation 20, ce qui réduit les efforts sur ce conduit lors d'un changement de buse. Par ailleurs, la partie non coaxiale 10 du passage de sortie 8 a pu être raccourcie, ce qui diminue encore le volume de liquide susceptible de s'écouler par une buse lors de la fermeture du dispositif anti-goutte. Le diamètre de la pièce porte-buses 12 est réduit par rapport à celui de la figure 1, ce qui réduit l'encombrement du dispositif dans le sens radial. En revanche, cet encombrement est légèrement augmenté dans le sens axial, du fait que les passages d'arrivée 2 et de sortie 8 débouchent l'un derrière l'autre dans la chambre 3 du dispositif anti-goutte, au lieu d'y déboucher côte à côte.

On notera que, sur la figure 2, le ressort 7 de la figure 1 est remplacé par un petit vérin 7A hydraulique ou pneumatique, par exemple, apte à déplacer la membrane 4, qui peut être commandé volontairement ou de façon automatique, et qui est monté dans le couvercle 5.

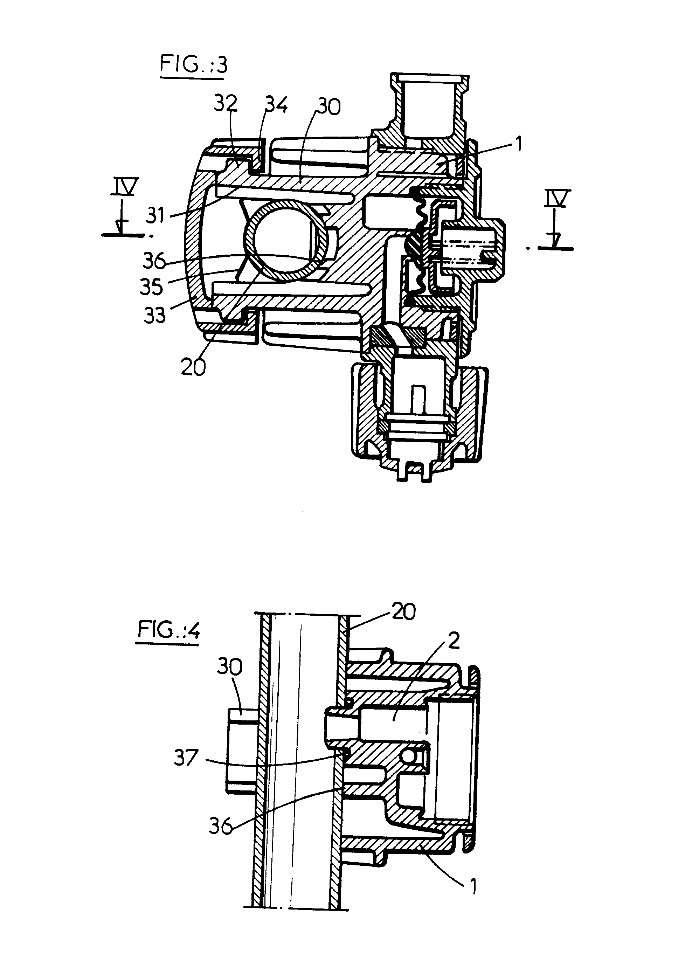

Les figures 3 et 4 montrent une variante du dispositif de la figure 1 qui diffère de celle-ci, intérieurement, par le fait que le passage d'entrée 2 est décalé par rapport à l'axe non pas dans une direction perpendiculaire au tuyau d'alimentation 20, mais dans une direction parallèle à celui-ci, ce qui réduit l'encombrement dans le sens vertical, à supposer que le tuyau 20 soit horizontal, ce qui est le cas général pour les pulvérisateurs utilisés dans l'agriculture.

En outre, le mode de fixation du corps 1 sur le tuyau 20 est différent:
Il est prévu sur le corps 1 un prolongement cylindrique 30, coaxial au passage d'entrée 2 et présentant une large échancrure radiale 31, dans laquelle peut s'engager le tuyau d'alimentation 20. De courtes nervures périphériques 32, perpendiculaires à l'axe, sont prévues à l'extérieur du prolongement 30. Une pièce 33 en forme de bouchon vient coiffer le prolongement 30. Elle présente des nervures internes 34, qui constituent avec les nervures 32 un assemblage à baïonnette, de type classique. Une surface formant came 35, portée par la pièce 33, vient, lorsque l'assemblage à baïonnette est réalisé, presser le tuyau 20 contre un épaulement 36 entourant l'extrémité du passage d'entrée 2. Un joint 37 assure l'étanchéité. Cette disposition assure une meilleure sûreté contre un démontage non désiré que celle des figures 1 et 2, par fausse manoeuvre, ou par fatigue de la pièce de fixation 25. On peut aussi prévoir un montage par vis à pas rapide de la pièce 33 sur le prolongement 30.

## Revendications

1. Dispositif support de buses, comportant, groupés en un ensemble démontable:
- un corps (1; 1A, 1B) qui présente un passage d'entrée (2) qui, d'un côté, peut être raccordé à un conduit d'alimentation (20) et, de l'autre côté, débouche dans une chambre (3),
- un dispositif anti-goutte placé dans la chambre (3) et comportant une pièce mobile ou déformable (4) apte à interrompre la circulation entre ladite chambre et un passage de sortie (8), et des moyens de déplacement (7, 7A) de ladite pièce mobile ou déformable,
- une pièce porte-buses (12), montée à rotation sur une surface de palier présentée par le corps, portant au moins deux buses (13), et présentant des orifices disposés pour mettre en communication une buse déterminée avec le passage de sortie (8) pour une position convenable de ladite pièce porte-buses,
caractérisé en ce que la surface de palier entoure la partie du corps qui contient la chambre (3) où est placé le dispositif anti-goutte.

2. Dispositif selon la revendication 1, caractérisé en ce que le dispositif comporte un couvercle (5) qui, avec le corps, délimite la chambre (3), et maintient le dispositif anti-goutte contre un déplacement axial qui l'écarterait du corps, et en ce que la surface de palier est disposée de telle sorte que la pièce porte-buses (12) est retenue par le couvercle, si le corps est d'une seule pièce, ou par la partie (1B) du corps qui porte le couvercle (5), si le corps est en deux parties (1A, 1B).

3. Dispositif selon la revendication 2, caractérisé en ce que la chambre (3) qui contient le dispositif anti-goutte a une symétrie de révolution, et en ce que la pièce porte-buses (12) se trouve essentiellement entre deux plans perpendiculaires à l'axe de la chambre, et dont l'un coupe le conduit d'alimentation ou la chambre, et l'autre coupe la chambre ou le couvercle.

4. Dispositif selon l'une des revendications 1 à 3, caractérisé en ce qu'une paroi du corps dont la face interne limite la chambre (3) constitue, au moins en partie, par sa face externe, la surface de palier sur laquelle est montée la pièce porte-buses (12).

5. Dispositif selon l'une des revendications 1 à 4, caractérisé en ce qu'il comprend des moyens de raccordement rapides pour monter le dispositif sur un conduit d'alimentation (20) présentant un orifice latéral et en même temps raccorder le passage d'entrée (2) à l'intérieur dudit conduit d'alimentation.

6. Dispositif selon la revendication 5, caractérisé en ce que le passage d'entrée (2) est parallèle à l'axe de rotation de la pièce porte-buses (12), et est prévu pour se raccorder perpendiculairement au conduit d'alimentation (20).

7. Dispositif selon la revendication 5 ou 6, caractérisé en ce que les bords dudit orifice latéral du conduit (20) pénètrent dans une gorge (24) du corps qui entoure l'orifice d'entrée du passage d'entrée (2) et est pourvue d'un joint torique, et en ce qu'une pièce élastique de fixation (25) prend appui sur deux saillies (26, 27) en forme de crochet, prévues de part et d'autre du passage d'entrée 2 et serre le conduit (20) contre ledit joint torique.

8. Dispositif selon la revendication 5 ou 6, caractérisé en ce que le corps (1) porte un prolongement cylindrique (30) coaxial au passage d'entrée (2) et présentant une échancrure radiale (31) dans laquelle peut s'engager le conduit (20), et en ce qu'une pièce (33) en forme de bouchon vient coiffer le prolongement (30) et est maintenue sur ledit prolongement par un assemblage à baïonnette (32, 34) ou par vis à pas rapide, la pièce (33) portant en outre une surface formant came (35) qui vient presser le conduit 20 contre un épaulement entourant l'extrémité du passage d'entrée (2).

9. Dispositif selon l'une des revendications 1 à 7, caractérisé en ce qu'il est prévu un vérin (7A), capable de déplacer la pièce mobile ou déformable (4), ce vérin étant commandé volontairement ou de façon automatique.

10. Dispositif selon les revendications 2 et 9, caractérisé en ce que le vérin (7A) est monté dans le couvercle (5) qui, avec le corps, limite la chambre (3).

## Patentansprüche

1. Düsenträger mit, in einer zerlegbaren Anordnung zusammengestellt:
- einem Gehäuse (1; 1A, 1B), das einen Einlaßkanal (2) aufweist, der einerseits an einer Versorgungsleitung (20) anschließbar ist und andererseits in einer Kammer (3) mündet;
- einer Tropfsperre, die in der Kammer (3) angeordnet ist und ein bewegliches oder verformbares Teil (4) zum Unterbrechen der Strömung zwischen der Kammer und einem Auslaßkanal (8) sowie Mittel (7, 7A) zum Verschieben des beweglichen oder verformbaren Teils aufweist;
- einem Düsentragteil (12), das auf einer vom Gehäuse gebildeten Lagerfläche drehbar gelagert ist, mindestens zwei Düsen (13) trägt und Öffnungen aufweist, die so angeordnet sind, daß sie eine bestimmte Düse mit dem Auslaßkanal (8) für eine gegebene Position des Düsentragteils in Strömungsverbindung setzen;
dadurch gekennzeichnet, daß die Lagerfläche denjenigen Teil des Gehäuses umgibt, der die Kammer (3) enthält, in der die Tropfsperre angeordnet ist.

2. Vorrichtung nach Anspruch 1, dadurch gekennzeichnet, daß sie einen Deckel (5) aufweist, der mit dem Gehäuse die Kammer (3) begrenzt und eine axiale Verschiebung der Tropfsperre hindert, die sie aus dem Gehaüse entfernen würde, und daß die Lagerfläche so angeordnet ist, daß das Düsentragteil (12) von dem Deckel gehalten wird, wenn das Gehäuse einteilig ausgebildet ist, oder von dem den Deckel (5) tragenden Abschnitt (1B) des Gehäuses gehalten wird, wenn das Gehäuse aus zwei Teilen (1A, 1B) besteht.

3. Vorrichtung nach Anspruch 2, dadurch gekennzeichnet, daß die Kammer (3), die die Tropfsperre enthält, rotationssymmetrisch ist, und daß das Düsentragteil (12) sich im wesentlichen zwischen zwei Ebenen befindet, die auf der Achse der Kammer senkrecht stehen und von denen die eine die Versorgungsleitung oder die Kammer schneidet und die andere die Kammer oder den Deckel schneidet.

4. Vorrichtung nach einem der Ansprüche 1 bis 3, dadurch gekennzeichnet, daß eine Wand des Gehäuses, deren Innenfläche die Kammer (3) begrenzt, zumindest teilweise mit ihrer Außenfläche die Lagerfläche bildet, an der das Düsentragteil (12) angebracht ist.

5. Vorrichtung nach einem der Ansprüche 1 bis 4, dadurch gekennzeichnet, daß sie Schnell-Anschlußmittel aufweist, um die Vorrichtung an einer Versorgungsleitung (20) mit einer seitlichen Öffnung anzubringen und gleichzeitig den Einlaßkanal (2) mit dem Inneren der Versorgungsleitung zu verbinden.

6. Vorrichtung nach Anspruch 5, dadurch gekennzeichnet, daß der Einlaßkanal (2) parallel zur Drehachse des Düsenträgers (12) verläuft und so ausgebildet ist, daß er sich senkrecht an die Versorgungsleitung (20) anschließt.

7. Vorrichtung nach Anspruch 5 oder 6, dadurch gekennzeichnet, daß die Ränder der seitlichen Öffnung der Leitung (20) in eine Nut (24) des Gehäuses eindringen, die die Einlaßöffnung des Einlaßkanals (2) umgibt und mit einer Ringdichtung versehen ist, und daß ein elastisches Befestigungsteil (25) an zwei beidseitig zu dem Einlaßkanal (2) vorgesehenen hakenförmigen Vorsprüngen (26,27) angreift und die Leitung (20) gegen die Ringdichtung klemmt.

8. Vorrichtung nach Anspruch 5 oder 6, dadurch gekennzeichnet, daß der Körper (1) eine zum Einlaßkanal (2) koaxiale zylindrische Verlängerung (30) trägt und eine radiale Ausnehmung (31) aufweist, in die die Leitung (20) greifen kann, und daß ein kappenförmiges Teil (33) die Verlängerung (30) übergreift und auf der Verlängerung durch einen Bajonettverschluß (32,34) oder eine schnellgängige Schraube gehalten wird, wobei das Teil (33) eine einen Nocken (35) bildende Fläche trägt, die die Leitung (20) gegen eine das Ende des Einlaßkanals (2) umgebende Schulter drückt.

9. Vorrichtung nach einem der Ansprüche 1 bis 7, dadurch gekennzeichnet, daß ein Stellmotor (7A) zum Verschieben des beweglichen oder formbaren Teils (4) vorgesehen ist, wobei dieser Stellmotor wahlweise oder automatisch steuerbar ist.

10. Vorrichtung nach den Ansprüchen 2 und 9, dadurch gekennzeichnet, daß der Stellmotor (7A) in dem Deckel (5) angebracht ist, der mit dem Gehäuse die Kammer (3) begrenzt.

## Claims

1. Nozzle-support device comprising, grouped in a dismantlable assembly :
- a body (1; 1A,1B) which has an inlet passage (2) which, on the one hand, can be connected to a feed line (20) and, on the other hand, emerges in a chamber (3),
- an anti-drip device placed in the chamber (3) and comprising a movable or deformable component (4) capable of interrupting the circulation between the said chamber and an outlet passage (8), and means (7,7A) for displacing the said movable or deformable component and
- a nozzle-carrier component (12) mounted rotatably on a bearing surface which forms part of the body and carrying at least two nozzles (13) and having orifices which are disposed in order to place a specific nozzle in communication with the outlet passage (8) for a suitable position of the said nozzle-carrier component,
characterized in that the bearing surface surrounds the portion of the body which contains the chamber (3), where the anti-drip device is placed.

2. Nozzle-carrier device according to Claim 1, characterized in that it comprises a cover (5) which, with the body, delimits the chamber (3) and prevents the anti-drip device being displaced axially, which would separate it from the body, and in that the bearing surface is disposed in such a manner that the nozzle-carrier component (12) is held by the cover, if the body is made as a single component, or by the portion (1B) of the body which carries the cover (5), if the body is made in two portions (1A,1B).

3. Nozzle-carrier device according to Claim 2, characterized in that the Chamber (3) which contains the anti-drip device is symmetrical in terms of revolution, and in that the nozzle-carrier component (12) is located essentially between two planes perpendicular to the axis of the chamber and of which one crosses the feed line or the chamber, and of which the other crosses the chamber or the cover.

4. Nozzle-carrier device according to Claim 1, characterized in that a wall of the body whose inner face defines the chamber (3) constitutes, at least partially, via its outer face, the bearing surface on which the nozzle-carrier component is mounted (12).

5. Nozzle-carrier device according to Claim 1, characterized in that it comprises rapid connection means for mounting the device on a feed line (20) having a lateral orifice and simultaneously connecting the inlet passage (2) to the inside of the said feed line.

6. Nozzle-carrier device according to Claim 5, characterized in that the inlet passage (2) is parallel to the axis of rotation of the nozzle-carrier component (12) and is provided in order to be connected perpendicularly to the feed line (20).

7. Nozzle-carrier device according to Claim 5, characterized in that the edges of the said lateral orifice of the line (20) penetrate into a groove (24) in the body which surrounds the inlet orifice of the inlet passage (2) and is provided with an O-ring, and in that a resilient fastening component (25) bears on two hook-shaped projections (26,27) provided on either side of the inlet passage (2) and clamps the line (20) against said O-ring.

8. Nozzle-carrier device according to Claim 5, characterized in that the body (1) carries a cylindrical extension (30) coaxial with the inlet passage (2) and having a radial notch (31) in which the line can engage, and in that a component (33) in the form of a stopper covers the extension (30) and is held on said extension by a bayonet assemby (32,34) or by a coarse-pitch screw, the component (33) also carrying a surface forming a cam (35) which presses the line (20) against a shoulder surrounding the end of the inlet passage (2).

9. Nozzle-carrier device according to anyone of claims 1 to 7, characterized in that it comprises a pack (7A) which is capable of moving the movable or deformable component (4), this jack being controlled at will or automatically.

10. Nozzle-carrier device according to the claims 2 and 9, characterized in that the jack (7A) is mounted in the cover (5) which, with the body, delimits the chamber (3).
